# EUROPEAN PATENT APPLICATION

(11) **EP 2 499 995 A1**
(43) Date of publication of application: **19.09.2012**
(21) Application number: 12000420.5
(22) Date of filing: 24.01.2012
(51) Int. Cl.: A61C 15/04

(54) **Dental flosser**

(30) Priority: 14.03.2011 US 201113047198
(71) Applicant: Dentek Oral Care, Inc., Maryville, TN 37801 (US)
(72) Inventor: Mowell, Eric, Maryville, TN 37801 (US); Shankle, Lex, Maryville, TN 37801 (US)
(74) Representative: Pluckrose, Anthony William

(57) **Abstract**

A dental flosser having a pair of crossing strands of dental floss oriented to allow the floss to wrap around both teeth within the interdental space, providing a more effective cleaning.

## Description

### FIELD

The present disclosure relates to devices for cleaning teeth. More particularly, the disclosure relates to a dental flosser having a pair of crossing strands of dental floss oriented to allow the floss to wrap around both teeth within the interdental space, providing a more effective cleaning.

### BACKGROUND AND SUMMARY

Dental flossers are used to facilitate introduction of dental floss into interdental spaces between adjacent teeth. While dental flossers facilitate use of dental floss, improvement is desired.

The disclosure advantageously provides a dental flosser including a first flosser and a second flosser.

The first flosser includes a handle a first pair of arms extending from a distal end of the handle, and a first dental floss extending between the first pair of arms of the first flosser. The second flosser includes a second pair of arms and a second dental floss extending between the second pair of arms of the second flosser. The second flosser is oriented adjacent to the first flosser such that the first floss and the second floss intersect one another at an intersection.

The configuration of the flosser enables the first floss and the second floss to cooperate to enable floss to be substantially wrapped around surfaces of a pair of teeth within an interdental space to be cleaned using the flosser to provide improved cleaning characteristics as compared to conventional flossers.

### BRIEF DESCRIPTION OF THE DRAWINGS

Further advantages of the disclosure are apparent by reference to the detailed description when considered in conjunction with the figures, which are not to scale so as to more clearly show the details, wherein like reference numbers indicate like elements throughout the several views, and wherein:

Fig. 1 is a perspective view of a dental flosser according to the disclosure.

Fig. 2 is an exploded view of the flosser of Fig. 1.

Fig. 3 is a top plan view of the flosser of Fig. 1.

Figs. 4-7 show use of a flosser according to the disclosure.

### DETAILED DESCRIPTION

With reference to the drawings, there is shown a dental flosser **10** having a first flosser **12** and a second flosser **14.** The flosser 10 may be made of one-piece construction, preferably by injection molding. Alternatively, the flosser 10 may be made by providing the flosser 12 and the flosser 14 as separate parts, as by injection molding, with the flosser 12 and the flosser 14 thereafter being permanently joined, as by sonic welding or permanent. The flosser 10 is preferably a disposable flosser of low-cost and single use construction.

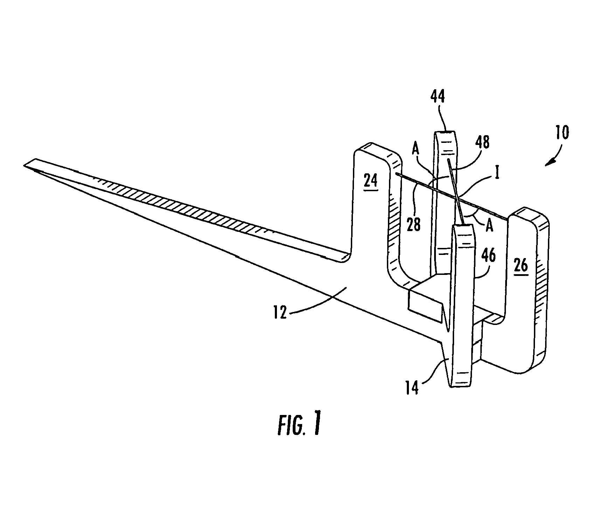

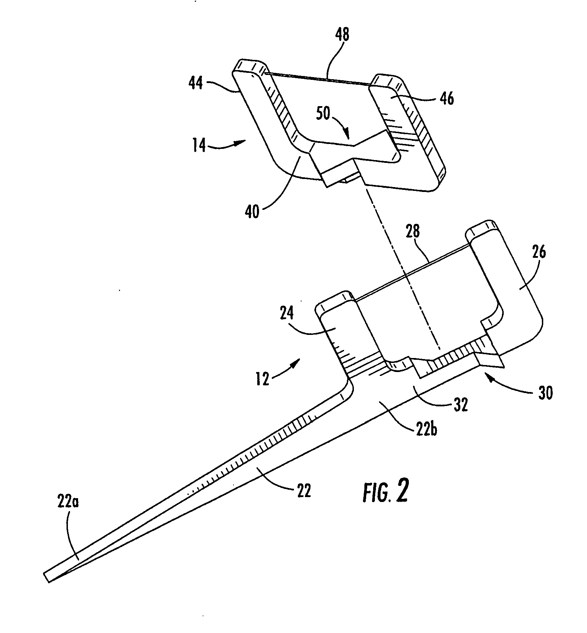

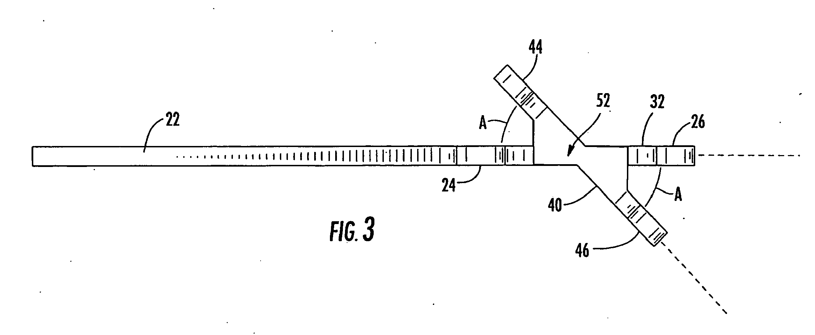

For example, Figs. 1 and 3 show the flosser 10 as fully assembled, either by one-piece injection molded construction, or by two part injection molding followed by permanent attachment of the flosser 12 and the flosser 14. Fig. 2 is an exploded view that shows the flosser 12 and the flosser 14 as they appear and fit together if made as separate parts.

The flosser 12 is of molded plastic construction and includes a handle **22** and a pair of arms **24** and **26** extending from a distal end **22a** of the handle 22. Floss **28** extends between the arms **24** and **26.** The floss **28** is preferably secured between the arms 24 and 26 during molding of the flosser 12. The handle 22 has a length of about 2 inches, and of decreasing taper from the distal end 22a to a proximal end **22b.** In this regard, the proximal end 22b is preferably configured to serve as a toothpick.

A buttress **30** extends from a cross-piece **32** that extends between the arms 24 and 26. The buttress 30 cooperates with the flosser 14 to provide support to act against forces generated during flossing of the teeth that would tend to urge the flosser 12 and the flosser 14 to move relative to one another.

The flosser 14 is of molded plastic construction and includes a cross-piece **40** from between a pair of arms **44** and **46.** Floss **48** extends between the arms **44** and **46.** The floss 48 is preferably secured between the arms 44 and 46 during molding of the flosser 14. A buttress **50** extends from the cross-piece 40.

The floss 28 and the floss 48 are preferably of the same dental floss material. However, if different flossing characteristics are desired, the floss 28 and the floss 48 may be different floss from one another. In this regard, the floss 28 and the floss 48 may be made of any material suitable for use as a dental floss.

The buttress 50 cooperates with the buttress 30 of the flosser 12 to provide the fully formed flosser 10 with an arm support **52** (Fig. 3) at the junction of the cross-piece 32 of the flosser 12 and the cross-piece 40 of the flosser 14 to act against forces generated during flossing of the teeth that would tend to urge the flosser 12 and the flosser 14 to move relative to one another. It will be understood that the arm support 52 is formed unitary when the flosser 10 is made by one-piece injection molded construction, and is formed by the fitting together of the buttress 30 and the buttress 50 when the flosser 12 and the flosser 14 are separately made and fit together.

The structure of the flosser 10 provides a pair of crossing strands of dental floss oriented to allow the floss to wrap around both teeth within the interdental space, providing a more effective cleaning. For example, the floss 28 of the flosser 12 and the floss 48 of the flosser 14 cross or intersect and preferably touch one another at an intersection **I** (Fig. 1). The intersection I is preferably substantially at the mid-point of each of the flosses 28 and 48, with the floss 28 and the floss 48 preferably having substantially the same length. The longitudinal axis of the legs 24 and 26 of the flosser 12 and the longitudinal axis of the legs 44 and 46 of the flosser 14 intersect to define an angle of intersection **A.** The angle of intersection A is preferably from about 10 degrees to about 30 degrees, most preferably about 20 degrees.

In a preferred embodiment, the longitudinal axis of the legs 24 and 26 of the flosser 12 is aligned with the longitudinal axis of the handle 22, and the longitudinal axis of the legs 44 and 46 of the flosser 14 is (when the legs are oriented upwardly) are clockwise rotated relative to the flosser 12. Maintaining the floss 28 in-line with the length axis of the handle 22, and having the floss 48 intersecting the floss 28 at the described location has been observed to provide improved cleaning characteristics.

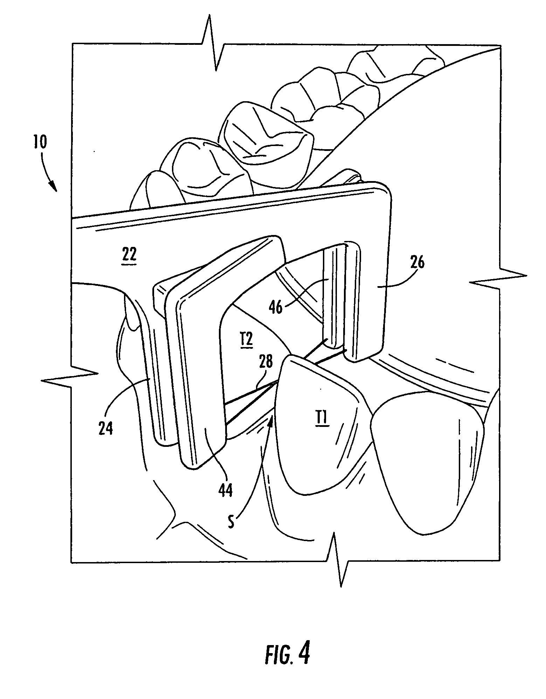

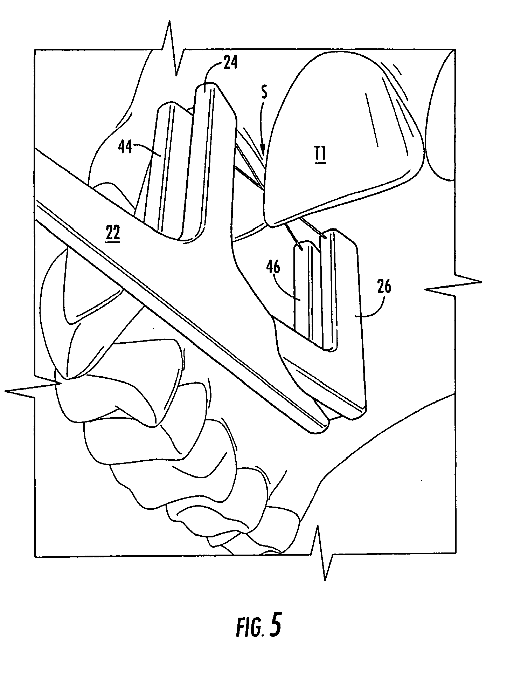

With reference to Figs. 4 and 5, the configuration of the flosser 10 enables the flosses 28 and 48 to be easily located within an interdental space S between adjacent teeth **T1** and **T2**, which can be bottom teeth (Fig. 4) or upper teeth (Fig. 5) and providing improved cleaning by enabling the floss to wrap around a tooth surface of the interdental space.

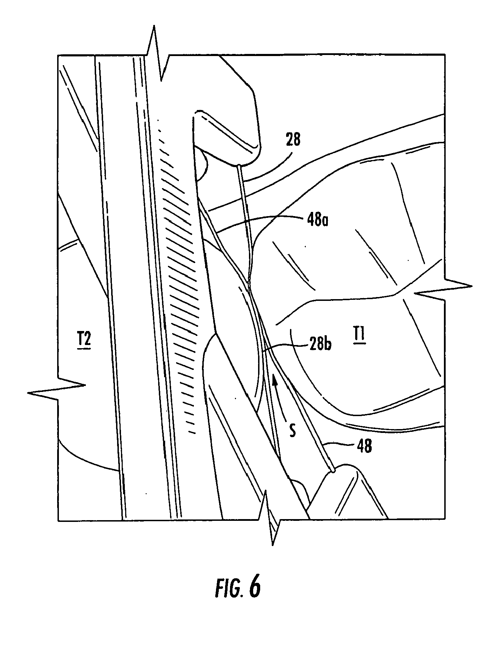

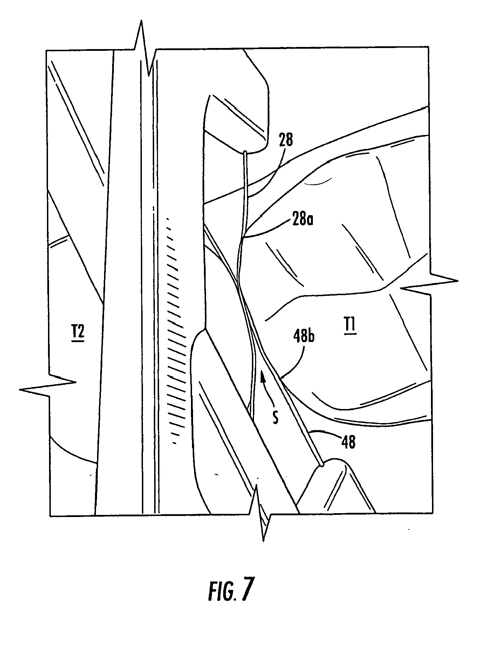

For example, as seen in Fig. 6, the flosser 10 may be manipulated so that a frontal portion **48a** of the floss 48 is conformed to substantially wrap around a rear portion of the surface of the tooth T2, and a rear portion **28b** of the floss 28 is conformed to substantially wrap around a front portion of the surface of the tooth T2. Likewise, as seen in Fig. 7, the flosser 10 may be manipulated so that a rear portion **48b** of the floss 48 is conformed to substantially wrap around a front portion of the surface of the tooth T1, and a front portion **28a** of the floss 28 is conformed to substantially wrap around a rear portion of the surface of the tooth T1.

Accordingly, it will be appreciated that the configuration of the flosser 10 enables floss to be substantially wrapped around the surfaces of the teeth T1 and T2 in the interdental space S, which provides superior cleaning characteristics compared to conventional flossers.

The foregoing description of preferred embodiments for this disclosure has been presented for purposes of illustration and description. It is not intended to be exhaustive or to limit the disclosure to the precise form disclosed. Obvious modifications or variations are possible in light of the above teachings. The embodiments are chosen and described in an effort to provide the best illustrations of the principles of the disclosure and its practical application, and to thereby enable one of ordinary skill in the art to utilize the disclosure in various embodiments and with various modifications as are suited to the particular use contemplated.

## Claims

1. A dental flosser, comprising:
a first flosser having a handle, a first pair of arms extending from a distal end of the handle, and a first dental floss extending between the first pair of arms of the first flosser; and
a second flosser having a second pair of arms and a second dental floss extending between the second pair of arms of the second flosser; the second flosser being oriented adjacent to the first flosser such that the first floss and the second floss cross one another at an intersection;
wherein the configuration of the flosser enables the first floss and the second floss to cooperate to enable floss to be substantially wrapped around surfaces of a pair of teeth within an interdental space to be cleaned using the flosser to provide improved cleaning characteristics as compared to conventional flossers.

2. The flosser of claim 1, wherein the intersection defines an angle of intersection of from about 10 degrees to about 30 degrees.

3. The flosser of claim 1 or claim 2, further comprising an arm support at a junction of the first flosser and the second flosser, the arm support being configured to act against forces generated during flossing of the teeth that would tend to urge the first flosser and the second flosser to move relative to one another.

4. The flosser of any preceding claim, wherein the first floss extends substantially in-line with the length axis of the handle.

5. The flosser of any preceding claim, wherein the first floss and the second floss touch one another at the intersection.
